# EUROPEAN PATENT SPECIFICATION

(11) **EP 2 766 376 B1**
(45) Date of publication and mention of the grant of the patent: **30.12.2015**
(21) Application number: 12773314.5
(22) Date of filing: 15.10.2012
(51) Int. Cl.: C07F 9/141

(54) **METHOD FOR THE ESTERIFICATION OF P-O COMPONENTS**
VERFAHREN ZUR VERESTERUNG VON P-O-KOMPONENTEN
PROCÉDÉ D'ESTÉRIFICATION DE COMPOSANTS P-O

(30) Priority: 13.10.2011 EP 11185059
(43) Date of publication of application: 20.08.2014
(73) Proprietor: Straitmark Holding AG, 6300 Zug (CH)
(72) Inventor: COGELS, Samuel, Corentin, B-1050 Ixelles (BE); NOTTÉ, Patrick, B-1300 Wavre (BE)
(74) Representative: Rippel, Hans Christoph
(86) International application number: PCT/EP2012/070393
(87) International publication number: WO 2013/053939

(56) References cited:
- EP-A2- 0 617 040

## Description

### Technical field of the invention

The present invention is directed to a new method for the esterification of P-O components and particularly to a new method for the esterification of P-O components containing at least one P-O-H functional group, whereby the P-O-H functional group(s) is (are) converted into P-O-R functional group(s). The method according to the invention is particularly focused on the manufacture of diesters of phosphorous acid.

In the present invention, the term "P-O component" refers broadly to any compound comprising at least one P-O covalent bond, regardless of the oxidation stage of the phosphorus atom in the P-O molecule.

### Background of the invention

Mono- and diesters of phosphorous acid have been known for several decades, and their importance as e.g. intermediates in the synthesis of various desirable compounds has now been well established.

Many synthetic routes for the manufacture of mono- and diesters of phosphorous acid have been reported in the scientific literature and the patent documentation. Most of the reported methods aimed at producing dialkyl phosphites make use of PCl₃. Examples of such methods are described e.g. in CN 1011250199, CN 101870712, HU 207334, HU 199149 and HU 196817. Although the dialkyl phosphites formation yields which have been reported are relatively high, it remains that such methods lead to forming hydrochloric acid and alkyl chlorinated compounds which ultimately need to be recovered and/or disposed of.

More environmental-friendly methods for the manufacture of dialkyl phosphites have been accordingly elaborated. Such methods are for example described in DD 108755 which describes the reaction of P₄O₆ vapor and methanol vapor to thus yield a mixture of liquid monoester and gaseous diester of phosphorous acid. US 4,342,709 describes a process of producing diethyl phosphites by reacting an excess of triethylphosphite with phosphorous acid.

DD 116457 discloses a continuous process for the manufacture of mono- and dialkyl phosphites by reaction: a mixture of alcohol and alkyl phosphite or a mixture of mono- and dialkyl phosphites to which a mixture is added technical grade P(III)-oxide containing elementary phosphorus. DD 108755 describes a process for the continuous preparation of mixtures of mono- and dialkyl phosphites by reacting P₄O₆ with alcohols in the gaseous phase. DD 222596 discloses a method for preparing pure alkyl- or aryl-diesters of phosphorous acid starting from a mixture of mono- and diester phosphites, which mixture is dissolved in an inert organic solvent while the mono-species are precipitated by leading ammonia gas through the mixture.

US 5,344,951 describes a process for preparing diesters of phosphorous acid whereby a phosphorous acid solution, in a solvent, is reacted with an excess of monohydric alcohol to thus yield dihydrocarbyl phosphite. CN 101775033 discloses a method for preparing phosphite ester using partitioned wall column reactive distillation technique. DE 4121696 describes a process for the preparation of dialkyl phosphites comprising the step of treating a mixture of methyl- and dimethyl phosphite with acetic anhydride and methanol in benzene resulting in a product containing a high level of dimethyl phosphite.

The prior art unequivocally shows that the dialkyl phosphite manufacturing technology while deserving substantial technological and economical improvements has been substantially stagnant for a long period and at least has not provided any viable solution to the outstanding problems. The state of the art technology is frequently cumbersome, time consuming, uneconomical and not adapted to actual and foreseeable commercial needs.

Alternative approaches for the manufacture of dialkyl phosphites have been accordingly described in the art. WO 2010/136564 for example discloses a process whereby dialkyl phosphites are prepared starting from P-O components containing from 1 to 6 P-O-P bonds in the molecule, wherein the disclosed process comprises the step of reacting a mixture of an alcohol and the P-O component with a tri-alkyl phosphite (TAP). WO 2010/136565 describes a method for the manufacture of dialkyl phosphites whereby a P-O component containing from 1 to 6 P-O-P bonds in the molecule is reacted with an alcohol and a carboxylic acid ester having from 1 to 6 carbon atoms in the alkyl group and from 5 to 20 carbon atoms in the esterifying alkyl group of the ester. WO 2010/136575 discloses a method whereby dialkyl phosphites are obtained by reacting a P-O component containing from 1 to 6 P-O-P bonds in the molecule with an alcohol and a ketal corresponding to a selected formula.

Without contesting the advantages associated with the methods for the manufacture of mono- and diesters of phosphorous acid reported in the art, there is still a need for an improved method for esterification of P-O components which would be efficient and environmental-friendly.

### Aims of the invention

It is an aim of the present invention to provide an efficient and environmental-friendly method for the manufacture of diesters and optionally monoesters of phosphorous acid.

### Summary of the invention

The present invention discloses a method for the esterification of a P-O component comprising the following steps:
a) forming a reaction medium by reacting a composition comprising a first P-O component containing at least one P-O-H functional group, wherein the phosphorus atom is at the oxidation stage (+III) with a second P-O component , said second P-O component comprising at least one P-O-P functional group wherein the phosphorus atoms are at the oxidation stage (+V); and
b) reacting an alcohol R¹OH with the reaction medium resulting from step a) so as to convert said at least one P-O-H functional group of said first P-O component into a P-O-R¹ functional group wherein R¹ is an alkyl or an aryl group.

Preferred embodiments of the present invention disclose one or more of the following features:
- the first P-O component in step a) is a monoester of phosphorous acid or a mixture of monoester of phosphorous acid and phosphorous acid or a mixture of monoester of phosphorous acid, diester of phosphorous acid and phosphorous acid wherein the number of molar equivalents of the P-O-P functional groups of said second P-O component per number of molar equivalents of P-O-H functional groups in said first P-O component is of at least 0.1:1; and the number of moles of said alcohol R¹OH in step b) per number of molar equivalents of said P-O-P functional groups present in said second P-O component, is of at least 1:1;
- the number of molar equivalents of P-O-P functional groups of said second P-O component per number of molar equivalents of P-O-H functional groups present in step a), is comprised between 0.1:1 and 3:1, preferably between 0.1:1 and 2:1;
- the number of moles of said alcohol R¹OH per number of molar equivalents of P-O-P functional groups present in the second P-O component in step b), is comprised between 1:1 and 4:1, preferably between 1:1 and 3:1;
- the composition comprising the first P-O component in step a), is obtained by reacting a mixture of an alcohol R²OH and a third P-O component comprising at least one P-O-P functional group the phosphorus atoms being at the oxidation stage (+III); whereby the ratio between the number of moles of said alcohol R²OH and the number of molar equivalents of P-O-P groups in said third P-O component is of at least 1:1;
- the step of reacting a mixture of an alcohol R²OH and a third P-O component is performed such that the ratio between the number of moles of said alcohol R²OH and the number of molar equivalents of P-O-P groups in said third P-O component is comprised between 1:1 and 30:1, preferably between 3:1 and 20:1, more preferably between 5:1 and 12:1;
- step a) is performed while maintaining the temperature of the reaction medium between 10°C and 80°C, preferably between 40°C and 60°C, for a period comprised between 5 minutes and 10 hours, preferably between 10 minutes and 7 hours, more preferably between 30 minutes and 5 hours;
- step b) is performed while maintaining the temperature of the reaction medium between 10°C and 80°C, preferably between 20°C and 70°C, for a period comprised between 1 minute and 120 minutes, preferably between 5 minutes and 90 minutes;
- the second P-O component comprises at least one P-O-P functional group in the molecule; preferably the second P-O component comprises 6 P-O-P functional groups; yet more preferably the second P-O component is selected from the group consisting of P₄O₁₀, polyphosphoric acids, and any combinations or mixtures thereof;
- the second P-O component is P₄O₁₀;
- the third P-O component comprises from 1 to 6, preferably from 2 to 6, more preferably from 3 to 6, even more preferably from 4 to 6, yet more preferably from 5 to 6 P-O-P functional groups in the molecule; still more preferably said third P-O component comprises about 6 P-O-P functional groups; yet more preferably said third P-O component is P₄O₆;
- the third P-O component is P₄O₆ in liquid form;
- each of R¹ or R² is independently selected from the group consisting of methyl, ethyl, propyl, isopropyl, butyl, t-butyl, isobutyl, pentyl, hexyl, octyl, dodecyl, 2-ethyl-hexyl and phenyl; more preferably each of R¹ or R² is independently selected from the group consisting of methyl, ethyl, isopropyl, hexyl and phenyl;
- the first P-O component is selected from the group consisting of phosphorous acid, monomethyl phosphite, monoisopropyl phosphite, monoethyl phosphite, monohexyl phosphite, monophenyl phosphite, monoeugenyl-1 phosphite, mono-2-ethyl-1-hexyl phosphite, monoallyl phosphite, monocyclohexyl phosphite, monododecyl-1 phosphite, mono-3-phenyl-1-propyl phosphite and monooctadecyl phosphite or mixtures therof; the second P-O component is P₄O₁₀; the third P-O component is P₄O₆ in liquid form, and, R¹ and R² in R¹OH and R²OH are independently selected from the group consisting of methyl, ethyl, isopropyl, hexyl and phenyl.

### Detailed description of the invention

The traditional approach to phosphite esters is the following:

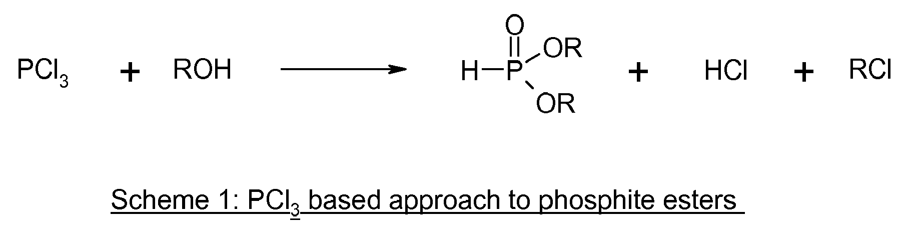

This traditional approach leads to the formation of hazardous products or side-products, such as hydrochloric acid or alkyl chlorinated compounds, which ultimately need to be recovered, reprocessed and/or somehow disposed of. The esterification method of P-O components of the present invention avoids these drawbacks.

The method of the invention is highly versatile in that it provides direct access to mono-and diesters of phosphorous acid with various carbon chain lengths and complexity. It involves fewer reaction steps and allows furthermore minimizing the loss of starting material caused by the formation of undesired side-products. It provides higher overall yields, when compared to conventional processes.

Throughout the description, the term "percent" or "%", unless defined differently, stands for "percent by weight" or "% by weight". The term "ppm" stands for "parts per million". The term "ambient" with respect to temperature and pressure generally means usually prevailing terrestrial conditions at sea level e.g. temperature is about 18°C to 25°C and pressure stands for 990-1050 mm Hg.

Preferably, in the method of the invention, a first P-O component containing at least one P-O-H functional group in the molecule wherein the phosphorus atom at the oxidation stage (+III) is selected from the group consisting of monoesters of phosphorous acid, phosphorous acid, and any combinations or mixtures thereof. More preferably, the P-O component containing at least one P-O-H functional group in the molecule for use herein is selected to be a monoester of phosphorous acid.

For the purpose of the present invention, the number of molar equivalents of P-O-H functional groups present in the composition comprising the first P-O component (or preferably the monoester of phosphorous acid) may be easily determined/calculated by those skilled in the art of organic chemistry using techniques well know to the skilled person. The number of molar equivalents of P-O-H functional groups may be for example deduced from the stoichiometry of the starting products or by performing ³¹P NMR analysis.

The number of molar equivalents of P-O-P functional groups present in the second and the third P-O component may be easily determined using techniques well know to the skilled person and may be for example deduced by addition of H₂O until complete conversion of the second P-O component into phosphoric acid.

Suitable examples of polyphosphoric acids include but are not limited to, pyrophosphoric acid, tripolyphosphoric acid, tetrapolyphosphoric acid, pentapolyphosphoric acid, hexapolyphosphoric acid, trimetaphosphoric acid, and any combinations or mixtures thereof. Polyphosphoric acid(s) for use herein may be e.g. obtained by reacting a suitable amount of water with P₄O₁₀. Accordingly, and in the context of the present invention, the expression "polyphosphoric acids" is meant to encompass any polyphosphoric acid compound (directly or indirectly) resulting from the reaction between P₄O₁₀ and water.

According to a preferred aspect, the second P-O component for use in the method of the invention is (or comprises) P₄O₁₀. In the context of the present invention, the terms "P₄O₁₀" and "P₂O₅" are used interchangeably.

In the context of the present invention, the second and third P-O components for use herein, may be represented by uniform ingredients having e.g. a uniform number of P-O-P bonds or by mixtures having a distribution of P-O-P bonds. Obviously, in the latter case, the number of P-O-P stands for an average number of P-O-P bonds as may occur in partially hydrolysed species of the corresponding P-O component.

Furthermore, the terms "P₂O₃" and "P₄O₆" can be used interchangeably. The term "liquid P₄O₆" embraces neat P₄O₆ in the liquid state.

According to this preferred execution, the compound P₄O₆ may be represented by a substantially pure compound containing at least 85 %, preferably more than 90 %, more preferably at least 95 % and in one particular execution at least 97 % of the P₄O₆. While tetraphosphorus hexa oxide, suitable for use within the context of this invention, may be manufactured by any known technology, in preferred executions the hexa oxide is prepared in accordance with the method described in WO 2009/068636 and/or WO 2010/055056. This section is hereby incorporated by reference. In detail, oxygen, or a mixture of oxygen and inert gas, and gaseous or liquid phosphorus are reacted in essentially stoichiometric amounts in a reaction unit at a temperature in the range from 1600 to 2000 K, by removing the heat created by the exothermic reaction of phosphorus and oxygen, while maintaining a preferred residence time of from 0.5 to 60 seconds followed by quenching the reaction product at a temperature below 700 K and refining the crude reaction product by distillation. The hexa oxide so prepared is a pure product containing usually at least 97 % of the oxide. The so produced P₄O₆ is generally represented by a liquid material of high purity containing in particular low levels of elementary phosphorus, P₄, preferably below 1000 ppm, expressed in relation to the P₄O₆ being 100%. The preferred residence time is from 5 to 30 seconds, more preferably from 8 to 30 seconds. The reaction product can, in one preferred execution, be quenched to a temperature below 350 K.

It is presumed that the P₄O₆ participating in a reaction at a temperature of from 24°C (melting t°) to 150°C is necessarily liquid or gaseous although solid species can, academically speaking, be used in the preparation of the reaction medium.

Alternatively, the third P-O component may be represented by P₄O₆, or partially hydrolysed species thereof, containing from 1 to 6 P-O-P bonds in the molecule. Examples of suitable species of the P-O component include, but are not limited to, pyrophosphorous acid, H₄P₂O₅, containing one P-O-P bond; P₄O₆ containing six P-O-P bonds; and partially hydrolysed species thereof containing 2, 3, 4 and 5 P-OP bonds respectively. Partially hydrolysed P₄O₆ can lead to hydrolysis products containing 2, 3, 4 or 5 P-O-P bonds.

For reasons of convenience and operational expertise, the third P-O component is preferably represented by P₄O₆ of high purity containing very low levels of impurities, in particular elemental phosphorus, P₄, at a level below 1000 ppm, usually below 500 ppm and preferably not more than 200 ppm, expressed in relation to the P₄O₆ being 100%.

Suitable third P-O components may also be prepared starting from PCl₃ by partial hydrolysis, or by reacting PCl₃ and phosphorous acid or by reacting P₄O₆ and phosphorous acid or by partial hydrolysis of P₄O₆. The third P-O component can be represented by mixtures/combinations of different reagents e.g. PCl₃, phosphorous acid and water, subject to the presence of at least one P-O-P bond in the mixture. The level of water to be employed is limited (in molar terms) to 4 moles of H₂O or less per mole of P₄O₆. In the event chlorine containing starting materials, e.g. PCl₃ and combinations thereof, are used the level of chlorine in the third P-O component shall preferably be kept below 1000 ppm, usually below 500 ppm, preferably below 200 ppm, expressed in relation to the P-O material being 100%.

Preferably, in the method according to the invention, each of R¹ or R² is independently selected from the group consisting of linear or branched saturated alkyl groups, linear or branched unsaturated alkyl groups, cycloalkyl groups, alkyl cycloalkyl groups, alkylene cycloalkyl groups, alkylene alkyl cycloalkyl groups, aryl groups, aralkyl groups, alkylene aryl groups and alkylene aralkyl groups, which comprise preferably from 1 to 20 carbon atoms, more preferably from 1 to 10 carbon atoms, even more preferably from 1 to 6 carbon atoms.

The chemical reactions of the method according to the invention may be conducted in a manner routinely known in the domain of the technology. As illustrated in the experimental showings, the method can be conducted by combining the essential reaction partners and heating the reaction mixture to a suitable temperature usually within the range of from 20°C to 80°C. The upper temperature aims at preventing any substantial undue decomposition of the reactants or of the intermediates formed in these reactions. It is understood and well known that the decomposition temperature of the reaction partners and intermediates can vary depending upon physical parameters, such as pressure and the qualitative and quantitative parameters of the ingredients in the reaction mixture.

The reaction partners of the method of the invention may be added simultaneously or successively, neat or with a suitable solvent, wherein the solvent is preferably inert with respect to the various P-O components and the used alcohols. According to the particular aspect where a solvent is used, suitable solvents for use herein include, but are not limited to, 1,4-dioxane; anisole; fluorobenzene; chlorinated hydrocarbons such as chlorobenzene, tetrachloroethane, tetrachloroethylene; polar solvents like sulfolane, diglyme, glyme, diphenyl oxide, polyalkylene glycol derivatives with capped OH groups such as OR where R is a low alkyl group; aliphatic hydrocarbons such as hexane, heptane, cyclohexane; non-cyclic ethers like dibutyl ether, diisopropyl ether, and dipentyl ether; cyclic ethers like tetrahydrofuran and dioxane; aliphatic esters such as e.g. ethyl acetate, methyl acetate, methyl formate, ethyl formate; aromatic hydrocarbons like toluene, xylene; organic nitriles like acetonitrile; silicon fluids like polymethylphenyl siloxane or mixtures thereof. When required for the purpose of the method of the invention, the solvent is preferably selected to be easily removed by distillation.

The chemical reactions of the method according to the invention may be conducted at ambient, or reduced, pressure and, depending upon reaction temperature, under distillation of potential excess alcohol. The duration of the reaction can vary from virtually instantaneous, e.g. 10 minutes, to an extended period of e.g. 10 hours. In preferred executions, excess alcohol will be distilled, possibly under vacuum prior to the addition of further reaction partners.

In another operational arrangement, the chemical reactions of the method of the invention may be conducted in a closed vessel under autogeneous pressure built up. In this method, the reaction partners, in total or in part, are added to the reaction vessel at the start. In the event of a partial mixture, the additional reaction partner can be added gradually, as soon as the effective reaction temperature has been reached. This set up is most advantageous as it allows the use of solvents with low boiling temperatures.

In yet another operational sequence, the chemical reactions may be conducted in a combined distillation and pressure arrangement. Specifically, the reaction vessel containing the reactant mixture is kept under ambient pressure at the selected reaction temperature. Optionally, the mixture is then continuously circulated through a reactor operated under autogeneous (autoclave principle) pressure build up thereby gradually adding the additional reaction partners in accordance with needs. In the event some reaction partners are heterogeneous, the reactions will preferably proceed in the autogeneous reactor. The chemical reactions are substantially completed under pressure and the reaction mixture then leaves the closed vessel and is recycled to the reactor where alcohol distillation can occur. The foregoing process variables thus show that the reaction can be conducted by a variety of substantially complementary arrangements. The reaction can thus be conducted as a batch process by heating the initial reactants in a closed vessel under autogeneous pressure built up, or under distillation, to a suitable temperature.

In another approach, the chemical reactions of the method of the invention may be conducted as a continuous process, possibly under autogeneous pressure, whereby the reactants are continuously injected into a reaction mixture at a suitable temperature. In yet another arrangement, the method can be represented by a semi-continuous setup whereby the chemical reactions are conducted continuously whereas preliminary reactions between parts of the components can be conducted batch-wise.

In a preferred aspect, the method according to the invention further comprises the step of isolating the mono- and/or diesters of phosphorous acid formed after step b). The mono- and/or diesters of phosphorous acid formed in the context of the method of the invention may, if needed, be recovered from the reaction product by conventional means including, in particular, vacuum distillation.

### EXAMPLES

### General procedure for the synthesis of diesters of phosphorous acid.

In a three-necked round-bottom flask, equipped with a mechanical stirrer, a reflux condenser and a dosing funnel, under nitrogen atmosphere, is added the first P-O component (P^{III}-OH). This first P-O component (table 1 column 5) is selected from H₃PO₃, monoalkyl phosphites or a mixture thereof and may further comprise dialkyl phosphites. The first P-O component is then heated to the temperature as given in table 1, column 11 (T° Step a) before proceeding to step a). The second P-O component (table 1 column 6) is then added while the temperature is maintained appropriately. The mixture is then allowed to react during the period of time, as given in table 1 column 13 (Reaction time step a) before proceeding to step b). Alcohol R¹-OH (table 1 column 3) is then added dropwise while the temperature is maintained at the temperature as given in table 1 column 12 (T° Step b). The mixture is then allowed to react during the period of time, as given in table 1 column 14 (Reaction time b) before cooling down to room temperature and performing ³¹P NMR analysis.

The first P-O component can alternatively be obtained by the reaction of alcohol R²-OH (table 1 column 4) and the third P-O component (table 1 column 7) comprising at least one P^{III}-O-P^{III} bond. In this particular case, a mixture of monoalkyl phosphites and dialkyl phosphites is obtained. This mixture may also include H₃PO₃. This mixture is then used as the first P-O component in step a).

When needed, an inert solvent, as given in table 1 column 2, can be used. If an excess of alcohol R²-OH is used, it must be distilled off before proceeding to step a).

The equation below describes a typical reaction of P₄O₆ with an alcohol R-OH. In this case, the monoalkyl phosphite is the only product containing a P-OH functional group.

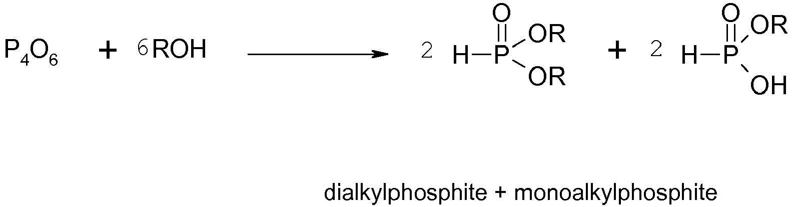

Conditions and ³¹P NMR analysis for a series of examples (1 to 31), according to the present invention, are reported in table 1. In column 16 (Yield % ³¹P NMR) the yield of P-OH functional groups converted into alkyl phosphite is represented.
Ratios are expressed in number of molar equivalents of functional group per number of molar equivalents of functional group.

**Tabel 1 :**

| **Entry** | **Solvent** | **R¹-OH** | **R²**-**OH** | **P^{III}-OH** (first P-O comp.)* | **P^{V}-O-P^{V}** (2^{nd} P-O comp.) | **P^{III}-O-P^{III}** (3^{rd} P-O comp.) | **Ratio R²-OH / P^{III}**-**O-P^{III}** | **Ratio P^{V}-O-P^{V}/ P^{III}-OH** (step a)) | **Ratio R¹-OH / P^{V}-O-P^{V}** (step b)) | **T° step a)** | **T° step b)** | **Reaction time step a) (minutes)** | **Reaction time step b) (minutes)** | **Main Product** | **Yield (%) (³¹P NMR)** |
|---|---|---|---|---|---|---|---|---|---|---|---|---|---|---|---|
| 1 | 1,4-dioxane | methanol | methanol | monomethyl phosphite | P₄O₁₀ | P₄O₆ | 6/1 | 1 / 1 | 1 / 1 | 50° C | 60° C | 60 | 5 | Dimethyl phosphite | 75,2 |
| 2 | 1,4-dioxane | methanol | methanol | monomethyl phosphite | P₄O₁₀ | P₄O₆ | 6/1 | 1 / 1 | 1 / 1 | 50° C | 60° C | 270 | 10 | Dimethyl phosphite | 76,4 |
| 3 | 1,4-dioxane | isopropanol | isopropanol | monoisopropyl phosphite | P₄O₁₀ | P₄O₆ | 6 / 1 | 1 / 1 | 1 / 1 | 53° C | 50° C | 1320 | 30 | Diisopropyl phosphite | 45,8 |
| 4 | none | ethanol | ethanol | monoethyl phosphite | P₄O₁₀ | P₄O₆ | 6 / 1 | 1 / 1 | 1 / 1 | 52° C | 52° C | 180 | 60 | Diethyl phosphite | 84,0 |
| 5 | none | 1-hexanol | 1-hexanol | monohexyl phosphite | P₄O₁₀ | P₄O₆ | 6 / 1 | 1 / 1 | 1 / 1 | 55° C | 55° C | 270 | 15 | Dihexyl phosphite | 79,6 |
| 6 | 1,4-dioxane | Phenol | Phenol | monophenyl phosphite | P₄O₁₀ | P₄O₆ | 6 / 1 | 1 / 1 | 1 / 1 | 50° C | 50° C | 180 | 20 | Diphen yl phosphite | 61,4 |
| 7 | 1,4-dioxane | methanol | methanol | monomethyl phosphite | Polyphosphoric acid 116% | P₄O₆ | 6 / 1 | 1 / 1 | 1 / 1 | 50° C | 55° C | 120 | 10 | Dimethyl phosphite | 53,4 |
| 8 | chlorobenzene | methanol | methanol | monomethyl phosphite / H₃PO₃ 1/1 | P₄O₁₀ | pyrop hosph orous acid | 1 / 1 | 1 / 1 | 1 / 1 | 50° C | 53° C | 120 | 20 | Dimethyl phosphite | 69,0 |
| 9 | cyclohexane | phenol | phenol | monophenyl phosphite | P₄O₁₀ | P₄O₆ | 6 / 1 | 1 / 1 | 1 / 1 | 53° C | 54° C | 160 | 20 | Diphenyl phosphite | 66,8 |
| 10 | diisopropyl ether | methanol | methanol | monomethyl phosphite | P₄O₁₀ | P₄O₆ | 6 / 1 | 1 / 1 | 1 / 1 | 50° C | 55° C | 120 | 15 | Dimethyl phosphite | 78,6 |
| 11 | ethyl acetate | ethanol | ethanol | monoethyl phosphite | P₄O₁₀ | P₄O₆ | 6 / 1 | 1 / 1 | 1 / 1 | 50° C | 55° C | 120 | 20 | Diethyl phosphite | 79,1 |
| 12 | toluene | phenol | phenol | monophenyl phosphite | P₄O₁₀ | P₄O₆ | 6 / 1 | 1 / 1 | 1 / 1 | 55° C | 50° C | 100 | 25 | Diphenyl phosphite | 60,6 |
| 13 | acetonitrile | methanol | ethanol | monoethyl phosphite | P₄O₁₀ | P₄O₆ | 6 / 1 | 1 / 1 | 1 / 1 | 52° C | 53° C | 120 | 10 | (ethyl, methyl) phosphite | 78,4 |
| 14 | acetonitrile | eugenol | eugenol | monoeugenyl phosphite | P₄O₁₀ | P₄O₆ | 6 / 1 | 1 / 1 | 1 / 1 | 52° C | 52° C | 360 | 60 | Dieugenyl phosphite | 46,9 |
| 15 | none | 2-ethyl-1-hexanol | 2-ethyl-1-hexanol | mono-2-ethyl-1-hexyl phosphite | P₄O₁₀ | P₄O₆ | 6 / 1 | 1 / 1 | 1 / 1 | 54° C | 56° C | 180 | 30 | Di-2-ethyl-1-hexyl phosphite | 46,2 |
| 16 | none | allyl alcohol | allyl alcohol | monoallyl phosphite | P₄O₁₀ | P₄O₆ | 6 / 1 | 1 / 1 | 1 / 1 | 53° C | 49° C | 120 | 20 | Diallyl phosphite | 81,6 |
| 17 | none | cyclohexanol | cyclohexanol | monocyclohexyl phosphite | P₄O₁₀ | P₄O₆ | 6 / 1 | 0,5 / 1 | 2 / 1 | 53° C | 53° C | 180 | 20 | Dicyclohexyl phosphite | 39,5 |
| 18 | none | 1-dodecanol | 1-dodecanol | monododecyl phosphite | P₄O₁₀ | P₄O₆ | 6 / 1 | 1 / 1 | 1 / 1 | 59° C | 57° C | 220 | 30 | Didodecyl phosphite | 65,0 |
| 19 | none | 3-phenyl-1-propanol | 3-phenyl-1-propanol | mono-3-phenyl-1-propyl phosphite | P₄O₁₀ | P₄O₆ | 6 /1 | 1 / 1 | 1 / 1 | 50° C | 53° C | 180 | 15 | Di-3-phenyl-1-propyl phosphite | 76,3 |
| 20 | none | 1-octadecanol | 1-octadecanol | monooctadecyl phosphite | P₄O₁₀ | P₄O₆ | 6 / 1 | 1 / 1 | 1 / 1 | 65° C | 53° C | 220 | 30 | Dioctadecyl phosphite | 63,5 |
| 21 | none | methanol | methanol | monomethyl phosphite | P₄O₁₀ | P₄O₆ | 30 / 1 | 1 / 1 | 1 / 1 | 55° C | 56° C | 120 | 20 | Dimethyl phosphite | 32,3 |
| 22 | none | methanol | methanol | monomethyl phosphite | P₄O₁₀ | P₄O₆ | 6 / 1 | 0,1 / 1 | 4 / 1 | 62° C | 62° C | 120 | 20 | Dimethyl phosphite | 9,2 |
| 23 | acetonitrile | methanol | / | H₃PO₃ | P₄O₁₀ | / | / | 1 / 1 | 1 / 1 | 75° C | 55° C | 180 | 20 | Dimethyl phosphite | 52,0 |
| 24 | 1,4-dioxane | methanol | methanol | monomethyl phosphite | P₄O₁₀ | P₄O₆ | 6 / 1 | 3 / 1 | 1 / 1 | 53° C | 55° C | 420 | 40 | Dimethyl phosphite | 83,7 |
| 25 | none | methanol | methanol | monomethyl posphite | P₄O₁₀ | P₄O₆ | 6 / 1 | 1 / 1 | 1 / 1 | 10° C | 55° C | 180 | 30 | Dimethyl phosphite | 35,7 |
| 26 | none | methanol | methanol | monomethyl posphite | P₄O₁₀ | P₄O₆ | 6 / 1 | 1 / 1 | 1 / 1 | 80° C | 51° C | 150 | 30 | Dimethyl phosphite | 56,6 |
| 27 | none | methanol | methanol | monomethyl posphite | P₄O₁₀ | P₄O₆ | 6 / 1 | 1 / 1 | 1 / 1 | 50° C | 10° C | 165 | 120 | Dimethyl phosphite | 75,8 |
| 28 | none | methanol | methanol | monomethyl posphite | P₄O₁₀ | P₄O₆ | 6 / 1 | 1 / 1 | 1 / 1 | 53° C | 80° C | 5 | 30 | Dimethyl phosphite | 38,8 |
| 29 | none | ethanol | / | monoethyl phosphite / H₃PO₃ 6/1 | P₄O₁₀ | / | / | 1 / 1 | 2 / 1 | 55° C | 45° C | 200 | 60 | Diethyl phosphite | 79,6 |
| 30 | none | ethanol | / | monoethyl phosphite / H₃PO₃ 5/2 | P₄O₁₀ | / | / | 1 / 1 | 2 / 1 | 54° C | 45° C | 200 | 60 | Diethyl phosphite | 80,1 |
| 31 | 1,4-dioxane | methanol | ethanol | monomethyl phosphite | Polyphosphoric acid 118% | P₄O₆ | 6/1 | 1 / 1 | 1 / 1 | 53° C | 60° C | 180 | 20 | Dimethyl phosphite | 66,0 |

| | | | | | | | | | | | | | | | |
|---|---|---|---|---|---|---|---|---|---|---|---|---|---|---|---|
| * The first P-O component may be obtained by the reaction of a compound containing a P**^{III}**-O-P**^{III}** functional group and an alcohol R²-OH, or it can be obtained from any other ways. The mixture containing the first P-O component may further comprise dialkyl phosphites or any compound which does not participate to the esterification reaction. | | | | | | | | | | | | | | | |

From table 1 it appears that relating to the yield of the diester of phosphorous acid:
- the use of sterically hindred alcohols results in a lower yield;
- the solvent has little effect; nevertheless solvent is needed for the case where the second alcohol is a solid;
- higher amounts of the second P-O component versus the first P-O component results in a higher yield; nevertheless this effect becomes limited once the molar equivalent ratio of P^{V}-O-P^{V}/ to the P**^{III}**-OH becomes higher than1/1
- step b) is performed with the minimum amount of alcohol R¹-OH needed for the hydrolysis of the P^{III}-O-P^{V} bonds created in step a); an excess of alcohol is not required;
- reaction temperatures for both, step a) and step b) show an optimum;
- a too low reaction temperature on step a) prevents the P^{V}-O-P^{V} of the second P-O component to react with the P^{III}-OH of the first P-O component; a too high reaction temperatures may induce transesterification reactions;
- sufficient long reaction times are preferred for step a) before proceeding to step b).

## Claims

1. A method for the esterification of a P-O component comprising the following steps :
a) forming a reaction medium by reacting a composition comprising a first P-O component containing at least one P-O-H functional group, wherein the phosphorus atoms are at the oxidation stage (+III) with a second P-O component , said second P-O component comprising at least one P-O-P functional group wherein the phosphorus atoms are at the oxidation stage (+V);and
b) reacting an alcohol R¹OH with the reaction medium resulting from step a) so as to convert said at least one P-O-H functional group of said first P-O component into a P-O-R¹ functional group wherein R¹ is an alkyl or an aryl group.

2. Method according to claim 1 wherein the first P-O component in step a) is a monoester of phosphorous acid or a mixture of monoester of phosphorous acid and phosphorous acid or a mixture of monoester of phosphorous acid, diester of phosphorous acid and phosphorous acid wherein:
- the number of molar equivalents of the P-O-P functional groups of said second P-O component per number of molar equivalents of P-O-H functional groups in said first P-O component is of at least 0.1:1; and
- the number of moles of said alcohol R¹OH in step b) per number of molar equivalents of said P-O-P functional groups present in said second P-O component, is of at least 1:1.

3. Method according to any of claims 1 or 2, wherein the number of molar equivalents of P-O-P functional groups of said second P-O component per number of molar equivalents of P-O-H functional groups present in step a), is comprised between 0.1:1 and 3:1.

4. Method according to any of the preceding claims, wherein the number of moles of said alcohol R¹OH per number of molar equivalents of P-O-P functional groups present in the second P-O component in step b), is comprised between 1:1 and 4:1.

5. Method according to any of the preceding claims, wherein the composition comprising the first P-O component in step a), is obtained by reacting a mixture of an alcohol R²OH and a third P-O component comprising at least one P-O-P functional group the phosphorus atoms being at the oxidation stage (+III); whereby the ratio between the number of moles of said alcohol R²OH and the number of molar equivalents of P-O-P groups in said third P-O component is of at least 1:1.

6. Method according to claim 5, wherein the step of reacting a mixture of an alcohol R²OH and a third P-O component is performed such that the ratio between the number of moles of said alcohol R²OH and the number of molar equivalents of P-O-P groups in said third P-O component is comprised between 1:1 and 30:1.

7. Method according to any of the preceding claims, wherein step a) is performed while maintaining the temperature of the reaction medium between 10°C and 80°C, preferably between 40°C and 60°C, for a period comprised between 5 minutes and 10 hours.

8. Method according to any of the preceding claims, wherein step b) is performed while maintaining the temperature of the reaction medium between 10°C and 80°C for a period comprised between 1 minute and 120 minutes.

9. Method according to any of the preceding claims, wherein the second P-O component is P₄O₁₀

10. Method according to any of the preceding claims 5-9, wherein the third P-O component comprises from 1 to 6 P-O-P functional groups in the molecule.

11. Method according to any of the preceding claims 5-10, wherein the third P-O component is P₄O₆ in liquid form.

12. Method according to any of the preceding claims, wherein each of R¹ or R² is independently selected from the group consisting of methyl, ethyl, propyl, isopropyl, butyl, t-butyl, isobutyl, pentyl, hexyl, octyl, dodecyl, 2-ethyl-hexyl and phenyl.

13. Method according to any of the preceding claims 5-12 wherein:
- the first P-O component is selected from the group consisting of phosphorous acid, monomethyl phosphite, monoisopropyl phosphite, monoethyl phosphite, monohexyl phosphite, monophenyl phosphite, monoeugenyl-1 phosphite, mono-2-ethyl-1-hexyl phosphite, monoallyl phosphite, monocyclohexyl phosphite, monododecyl-1 phosphite, mono-3-phenyl-1-propyl phosphite and monooctadecyl phosphite or mixtures therof;
- the second P-O component is P₄O₁₀;
- the third P-O component is P₄O₆ in liquid form;
- R¹ and R² in R¹OH and R²OH are independently selected from the group consisting of methyl, ethyl, isopropyl, hexyl and phenyl.

## Patentansprüche

1. Verfahren zur Veresterung einer P-O-Komponente, umfassend die folgenden Schritte:
a) Bilden eines Reaktionsmediums durch Umsetzen einer Zusammensetzung, enthaltend eine erste P-O-Komponente, welche mindestens eine P-O-H-funktionelle Gruppe enthält, wobei die Phosphoratome in der Oxidationsstufe (+III) sind, mit einer zweiten P-O-Komponente, wobei die zweite P-O-Komponente mindestens eine P-O-P-funktionelle Gruppe enthält, wobei die Phosphoratome in der Oxidationsstufe (+V) sind; und
b) Umsetzen eines Alkohols R¹OH mit dem in Schritt a) erhaltenen Reaktionsmedium derart, dass die mindestens eine P-O-H-funktionelle Gruppe der ersten P-O-Komponente in eine P-O-R¹-funktionelle Gruppe umgewandelt wird, wobei R¹ eine Alkyl- oder eine Aryl-Gruppe ist.

2. Verfahren gemäß Anspruch 1, wobei die erste P-O-Komponente in Schritt a) ein Phosphorsäuremonoester oder eine Mischung von Phosphorsäuremonoester und Phosphorsäure oder eine Mischung von Phosphorsäuremonoester, - diester und Phosphorsäure ist, wobei:
- die Anzahl der molaren Äquivalente der P-O-P-funktionellen Gruppen der zweiten P-O-Komponente pro Anzahl der molaren Äquivalente der P-O-H-funktionellen Gruppen in der ersten P-O-Komponente mindestens 0,1:1 ist; und
- die Anzahl der Mol des Alkohols R¹OH in Schritt b) pro Anzahl der molaren Äquivalente der P-O-P-funktionellen Gruppen in dieser zweiten P-O-Komponente mindestens 1:1 ist.

3. Verfahren gemäß einem der Ansprüche 1 oder 2, wobei die Anzahl der molaren Äquivalente der P-O-P-funktionellen Gruppen der zweiten P-O-Komponente pro Anzahl der molaren Äquivalente an P-O-H-funktionellen Gruppen zugegen in Schritt a) zwischen 0,1:1 und 3:1 liegt.

4. Verfahren gemäß einem der vorherigen Ansprüche, wobei die Anzahl an Mol des Alkohols R¹OH pro Anzahl der molaren Äquivalente an P-O-P-funktionellen Gruppen zgegen in der zweiten P-O-Komponente in Schritt b) zwischen 1:1 und 4:1 liegt.

5. Verfahren gemäß einem der vorherigen Ansprüche, wobei die Zusammensetzung enthaltend die erste P-O-Komponente in Schritt a) durch Umsetzung einer Mischung eines Alkohols R²OH und einer dritten P-O-Komponente, enthaltend mindestens eine P-O-P-funktionelle Gruppe, wobei die Phosphoratome in der Oxidationsstufe (+III) sind, erhalten wird; wobei das Verhältnis zwischen der Anzahl der Mol des Alkohols R²OH und der Anzahl der molaren Äquivalente an P-O-P-Gruppen in der dritten P-O-Komponente mindestens 1:1 ist.

6. Verfahren gemäß Anspruch 5, wobei der Schritt der Umsetzung einer Mischung eines Alkohols R²OH und einer dritten P-O-Komponente so ausgeführt wird, dass das Verhältnis zwischen der Anzahl der Mol des Alkohols R²OH und der Anzahl der molaren Äquivalente an P-O-P-Gruppen in der dritten P-O-Komponente zwischen 1:1 und 30:1 liegt.

7. Verfahren gemäß einem der vorherigen Ansprüche, wobei Schritt a) über einen Zeitraum zwischen 5 Minuten und 10 Stunden ausgeführt wird, während die Temperatur des Reaktionsmediums zwischen 10°C und 80°C, bevorzugt zwischen 40°C und 60°C, gehalten wird.

8. Verfahren gemäß einem der vorherigen Ansprüche, wobei Schritt b) über einen Zeitraum zwischen 1 Minute und 120 Minuten ausgeführt wird, während die Temperatur des Reaktionsmediums zwischen 10°C und 80°C gehalten wird.

9. Verfahren gemäß einem der vorherigen Ansprüche, wobei die zweite P-O-Komponente P₄O₁₀ ist.

10. Verfahren gemäß einem der vorherigen Ansprüche 5 bis 9, wobei die dritte P-O-Komponente 1 bis 6 P-O-P-funktionelle Gruppen in dem Molekül enthält.

11. Verfahren gemäß einem der vorherigen Ansprüche 5 bis 10, wobei die dritte P-O-Komponente P₄O₆ in flüssiger Form ist.

12. Verfahren gemäß einem der vorangehenden Ansprüche, wobei jedes R¹ oder R² unabhängig ausgewählt ist aus der Gruppe bestehend aus Methyl, Ethyl, Propyl, Isopropyl, Butyl, t-Butyl, Isobutyl, Pentyl, Hexyl, Octyl, Dodecyl, 2-Ethylhexyl und Phenyl.

13. Verfahren gemäß einem der vorherigen Ansprüche 5 bis 12, wobei:
- die erste P-O-Komponente ausgewählt ist aus der Gruppe bestehend aus Phosphorsäure, Monomethylphosphit, Monoisopropylphosphit, Monoethylphosphit, Monohexylphosphit, Monophenylphosphit, Moneugenyl-1-phosphit, Mono-2-ethyl-1-hexylphosphit, Monoallylphosphit, Monocyclohexylphosphit, Monododecyl-1-phosphit, Mono-3-phenyl-1-propylphosphit und Monooctadecylphosphit oder Mischungen davon;
- die zweite P-O-Komponente P₄O₁₀ ist;
- die dritte P-O-Komponente P₄O₆ in flüssiger Form ist;
- R¹ und R² in R¹OH und R²OH unabhängig ausgewählt sind aus der Gruppe bestehend aus Methyl, Ethyl, Isopropyl, Hexyl und Phenyl.

## Revendications

1. Procédé pour l'estérification d'un composant renfermant P-O comprenant les étapes suivantes :
a) la formation d'un milieu réactionnel par réaction d'une composition comprenant un premier composant renfermant P-O contenant au moins un groupe fonctionnel P-O-H, dans lequel les atomes de phosphore sont à l'état d'oxydation (+III), avec un deuxième composant renfermant P-O, ledit deuxième composant renfermant P-O comprenant au moins un groupe fonctionnel P-O-P dans lequel les atomes de phosphore sont à l'état d'oxydation (+V) ; et
b) la réaction d'un alcool R¹OH avec le milieu réactionnel résultant de l'étape a) afin de convertir ledit au moins un groupe fonctionnel P-O-H dudit premier composant renfermant P-O en un groupe fonctionnel P-O-R¹ dans lequel R¹ est un groupe alkyle ou aryle.

2. Procédé selon la revendication 1 dans lequel le premier composant renfermant P-O dans l'étape a) est un monoester d'acide phosphoreux ou un mélange de monoester d'acide phosphoreux et d'acide phosphoreux ou un mélange de monoester d'acide phosphoreux, de diester d'acide phosphoreux et d'acide phosphoreux dans lequel :
- le nombre d'équivalents molaires des groupes fonctionnels P-O-P dudit deuxième composant renfermant P-O par rapport au nombre d'équivalents molaires de groupes fonctionnels P-O-H dans ledit premier composant renfermant P-O est d'au moins 0,1:1 ; et
- le nombre de moles dudit alcool R¹OH dans l'étape b) par rapport au nombre d'équivalents molaires desdits groupes fonctionnels P-O-P présents dans ledit deuxième composant renfermant P-O est d'au moins 1:1.

3. Procédé selon l'une quelconque des revendications 1 ou 2, dans lequel de nombre d'équivalents molaires de groupes fonctionnels P-O-P dudit deuxième composant renfermant P-O par rapport au nombre d'équivalents molaires de groupes fonctionnels P-O-H présents dans ladite étape a) est compris entre 0,1:1 et 3:1.

4. Procédé selon l'une quelconque des revendications précédentes, dans lequel le nombre de moles dudit alcool R¹OH par rapport au nombre d'équivalents molaires de groupes fonctionnels P-O-P présents dans le deuxième composant renfermant P-O dans l'étape b) est compris entre 1:1 et 4:1.

5. Procédé selon l'une quelconque des revendications précédentes, dans lequel la composition comprenant le premier composant renfermant P-O dans l'étape a) est obtenue par réaction d'un mélange d'un alcool R²OH et d'un troisième composant renfermant P-O comprenant au moins un groupe fonctionnel P-O-P, les atomes de phosphore étant à l'état d'oxydation (+III) ; moyennant quoi le rapport entre le nombre de moles dudit alcool R²OH et le nombre d'équivalents molaires de groupes P-O-P dans ledit troisième composant renfermant P-O est d'au moins 1:1.

6. Procédé selon la revendication 5, dans lequel l'étape de réaction d'un mélange d'un alcool R²OH et d'un troisième composant renfermant P-O est effectuée de façon telle que le rapport entre le nombre de moles dudit alcool R²OH et le nombre d'équivalents molaires de groupes P-O-P dans ledit troisième composant renfermant P-O est compris entre 1:1 et 30:1.

7. Procédé selon l'une quelconque des revendications précédentes, dans lequel l'étape a) est effectuée alors que la température du milieu réactionnel est maintenue entre 10 °C et 80 °C, de préférence entre 40 °C et 60 °C, pendant une durée comprise entre 5 minutes et 10 heures.

8. Procédé selon l'une quelconque des revendications précédentes, dans lequel l'étape b) est effectuée alors que la température du milieu réactionnel est maintenue entre 10 °C et 80 °C pendant une durée comprise entre 1 minute et 120 minutes.

9. Procédé selon l'une quelconque des revendications précédentes, dans lequel le deuxième composant renfermant P-O est P₄O₁₀.

10. Procédé selon l'une quelconque des revendications 5 à 9 précédentes, dans lequel le troisième composant renfermant P-O comprend de 1 à 6 groupes fonctionnels P-O-P dans la molécule.

11. Procédé selon l'une quelconque des revendications 5 à 10 précédentes, dans lequel le troisième composant renfermant P-O est P₄O₆ sous forme liquide.

12. Procédé selon l'une quelconque des revendications précédentes, dans lequel chacun de R¹ ou R² est indépendamment choisi dans le groupe constitué par les groupes méthyle, éthyle, propyle, isopropyle, butyle, *t*-butyle, isobutyle, pentyle, hexyle, octyle, dodécyle, 2-éthylhexyle et phényle.

13. Procédé selon l'une quelconque des revendications 5 à 12 précédentes, dans lequel :
- le premier composant renfermant P-O est choisi dans le groupe constitué par l'acide phosphoreux, le phosphite de monométhyle, le phosphite de monoisopropyle, le phosphite de monoéthyle, le phosphite de monohexyle, le phosphite de monophényle, le phosphite de monoeugén-1-yle, le phosphite de mono-2-éthylhex-1-yle, le phosphite de monoallyle, le phosphite de monocyclohexyle, le phosphite de monododéc-1-yle, le phosphite de mono-3-phénylprop-1-yle et le phosphite de monooctadécyle ou les mélanges de ceux-ci ;
- le deuxième composant renfermant P-O est P₄O₁₀ ;
- le troisième composant renfermant P-O est P₄O₆ sous forme liquide ;
- R¹ et R² dans R¹OH et R²OH sont indépendamment choisis dans le groupe constitué par les groupes méthyle, éthyle, isopropyle, hexyle et phényle.
